(19) Europäisches Patentamt

European Patent Office

Office européen des brevets

(11) Veröffentlichungsnummer: **0 175 860 B1**

# (12) EUROPÄISCHE PATENTSCHRIFT

(45) Veröffentlichungstag der Patentschrift: **18.03.92**

(21) Anmeldenummer: **85108482.2**

(22) Anmeldetag: **09.07.85**

(51) Int. Cl.⁵: **H04N 11/00**

(54) **Verfahren zur kompatiblen Auflösungserhöhung für Farbfernsehübertragungssysteme mit Reduzierung der Übersprechstörungen bei bewegungsadaptiver Bildverarbeitung.**

(30) Priorität: **26.09.84 DE 3435264**

(43) Veröffentlichungstag der Anmeldung:
**02.04.86 Patentblatt 86/14**

(45) Bekanntmachung des Hinweises auf die Patenterteilung:
**18.03.92 Patentblatt 92/12**

(84) Benannte Vertragsstaaten:
**BE DE FR GB IT NL**

(56) Entgegenhaltungen:
**GB-A- 2 126 822**

**RUNDFUNKTECHNISCHE MITTEILUNGEN, Band 28, Nr. 5, September/Oktober 1984, Seiten 224-234, Norderstedt, DE; F. STOLLENWERK et al.: "Fernsehsysteme mit kompatibel erhöhter Bildqualität - ein Systemvergleich"**

**NTG FACHBERICHTE, TEXT UND BILDKOMMUNIKATION, Band 1974, Septmber 1980, Seiten 407-416, Berlin, DE; B. WENDLAND: "Konzepte für ein kompatibles HiFi-Fernsehsystem"**

(73) Patentinhaber: **ANT Nachrichtentechnik GmbH Gerberstrasse 33 W-7150 Backnang(DE)**

(72) Erfinder: **Silverberg, Michael, Dipl.-Ing. Fritz-Reuter-Str. 6 W-4720 Beckum 2(DE)**

EP 0 175 860 B1

EP 0 175 860 B1

## Beschreibung

Die Erfindung betrifft ein Verfahren zur kompatiblen Auflösungserhöhung für Farbfernsehübertragungssysteme mit Reduzierung der Übersprechstörungen bei bewegungsadaptiver Bildverarbeitung gemäß dem Wortlaut des Patentanspruchs 1. Ein ähnliches Verfahren ist bekannt aus der EP-A-0 146 694

In EP-A-0 146 694 wurde die Offsetabtastung/Offsetmodulation dazu benutzt, eine erhöhte Detailauflösung zu erreichen, wobei die Kompatibilität zu bestehenden Übertragungssystemen gewahrt werden mußte. Unerwünschte Störkomponenten, die durch die Offsetabtastung/modulation entstanden, wurden in ihren Amplituden abgesenkt. Die in EP-A-0 146 694 aufgezeigten Maßnahmen lassen sich jedoch nur für eine im wesentlichen statische Fernsehbildübertragung anwenden.

Auch die Rundfunktechischen Mitteilungen Band 28, Nr. 5, September/Oktober 1984, Seiten 224 - 234, Norderstedt, DE, F. Stollenwerk et. al.: "Fernsehsysteme mit kompatibel erhöhter Bildqualität-ein Systemvergleich "offenbaren ein Verfahren zur kompatiblen Auflösungserhöhung für Farbfernsehübertragungssysteme mit Reduzierung der Übersprechstörungen bei bewegungsadaptiver Bildverarbeitung.

Aufgabe der Erfindung ist es daher, ausgehend vom genannten stand der Technik, eine bewegungsadaptive Bildverarbeitung mit kleiner und mittlerer Bewegungsgeschwindigkeit anzugeben, wobei Übersprechstörungen, insbesondere Cross-Luminanzstörungen, vermieden bzw. wirksam unterdrückt werden sollen. Diese Aufgabe wird durch die Merkmale des Patentanspruchs 1 gelöst.

Die Unteransprüche 2 und 3 zeigen vorteilhafte Ausgestaltungen der Erfindung auf.

Die Vorteile der Erfindung ergeben sich insbesondere dadurch, daß mit wenig schaltungstechnischem Aufwand eine Reduzierung der Übersprechstörungen erfolgen kann und zwar so weit, daß, wie Tests zeigten, vom Betrachter keine Übersprechstörungen mehr wahrgenommen werden können. Da sich die Chromaspektren empfängerseitig nicht überlappen, ist eine empfängerseitige Trennung der U- und V-Komponenten durch Vertikalfilterung möglich; eine exakt arbeitende Quadraturdemodulation ist daher nicht mehr notwendig. Die Vorteile der Offsetmodulation sind durch die Maßnahmen der Erfindung auch für die Bewegtbildübertragung bis zu etwa 2 pel/frame nutzbar.

Bevor nun die Erfindung im einzelnen beschrieben wird, soll zuerst auf die Voraussetzungen der Erfindung in Zusammenhang mit der Auflösungserhöhung und der Bewegtbildübertragung eingegangen werden.

Zur Erläuterung dieser Voraussetzungen sowie der Beschreibung der Erfindung dienen die nachfolgend aufgeführten Zeichnungen, die im einzelnen zeigen:

Fig. 1 ein Blockschaltbild für ein Farbfernsehübertragungssystem mit bewegungsadaptiver Bildverarbeitung,

Fig. 2 ein Farbfernsehübertragungssystem nach PAL-Offset,

Fig. 3 das Spektrum für ein diagonal vorgefiltertes Leuchtdichtesignal,

Fig. 4 das Leuchtdichtesignalspektrum nach der Offsetmodulation,

Fig. 5 den Frequenzgang des bandbegrenzten PAL-Offsetspektrums,

Fig. 6 den Frequenzgang des PAL-Offsetspektrums nach der empfangsseitigen Nyquistfilterung,

Fig. 7 den Frequenzgang des PAL-Spektrums nach der Offsetdemodulation und Tiefpaßfilterung,

Fig. 8 Schaltungsanordnungen sowie Frequenzverläufe zur Erzeugung komplementärer Frequenzgänge,

Fig. 9 die Frequenzverläufe der zu filternden, bzw. gefilterten Signalspektren,

Fig. 10 eine Schaltungsanordnung zur modifizierten Offsetdemodulation,

Fig. 11 dem Frequenzgang des Tiefpasses in einem modifizierten Offsetdemodulator,

Fig. 12 den Frequenzgang des Leuchtdichte- und Zusatzspektrums bei modifizierter Offsetdemodulation,

Fig. 13 das Signalspektrum für ein komplettes offsetmoduliertes FBAS-Signal,

Fig. 14 ein Blockschaltbild zur bewegungsadaptiven Bildübertragung (Sender),

Fig. 15 ein Blockschaltbild zur bewegungsadaptiven Bildübertragung (Empfänger),

Fig. 16 das Luminanzspektrum nach senderseitiger Diagonalfilterung,

Fig. 17 das Luminanzspektrum nach der Offsetmodulation,

Fig. 18 ein Blockschaltbild des Vorfilters V1,

Fig. 19 den Frequenzgang des ersten Teilfilters T1,

Fig. 20 den Frequenzgang des zweiten Teilfilters T2,

Fig. 21 den Frequenzgang des dritten Teilfilters T3,

Fig. 22 den Aufbau des Vorfilters V3,

Fig. 23 den Frequenzgang des Teilfilters T4,

Fig. 24 den Frequenzgang des Teilfilters T5,

2

Fig. 25    das Luminanzspektrum am Ausgang des Vorfilters V3,

Fig. 26    den Aufbau des Vorfilters V2,

Fig. 27    den Frequenzgang des Teilfilters T6,

Fig. 28    den Frequenzgang des Teilfilters T7,

Fig. 29    den Frequenzgang des FBAS-Signals bei PAL-Offsetübertragung mit mittleren Bewegungsgeschwindigkeiten (0,24 pel/frame ≤ V ≤ 2 pel/frame),

Fig. 30    den Frequenzgang des FBAS-Signals bei PAL-Offsetübertragung mit mittleren Bewegungsgeschwindigkeiten (V ≤ 0,24 pel/frame),

Fig. 31    den Frequenzgang des FBAS-Signals bei Übertragung von 50 Bewegungsphasen pro Sekunde (V > 2 pel/frame).

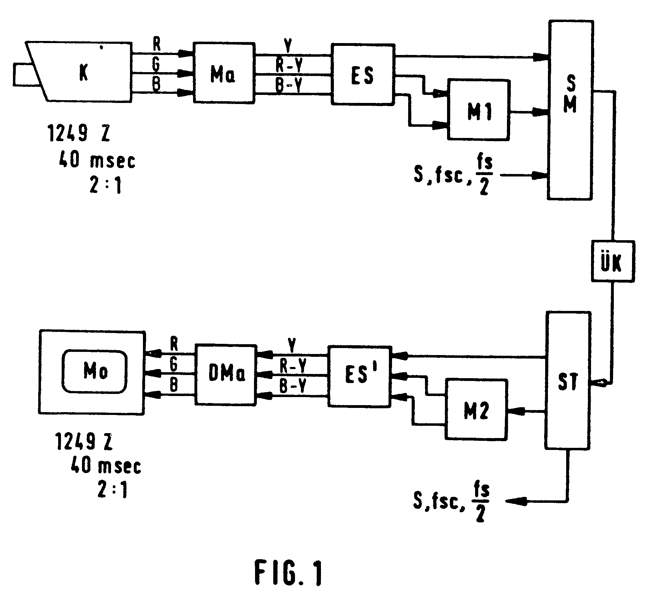

In "High Quality Television by Signal Processing, 2nd International Conference on New Systems and Services in Telecommunication, Liege, November 1983" ist ein Konzept für eine bewegungsadaptive Bildverarbeitung beschrieben, das eine Qualitätsverbesserung unter Gewährleistung der Kompatibilität zu bestehenden Systemen erlaubt. Dieses Konzept wird nun in Verbindung mit dem in EP 0 146 694 A1 vorgeschlagenen Verfahren anhand von Fig. 1 näher erläutert.

Eine Hochzeilenkamera K liefert eine Bildfolge mit 1249 Zeilen in 40 msec im Zeilensprungverfahren 2:1. Diese Bildfolge wird in einer Matrixschaltung Ma in die Farbdifferenzsignale R-Y und B-Y sowie das Leuchtdichtesignal Y zerlegt. Diese Signale werden einer Einrichtung ES zur bewegungsadaptiven Signalverarbeitung zugeführt. In dieser Einrichtung ES sind Bausteine zur Vollbildwiedergabe, Diagonalfilterung und Offsetmodulation enthalten, die an anderer Stelle noch beschrieben werden.

In Bildbereichen mit Bewegungsgeschwindigkeiten von höchstens 2 pel/frame ist eine Verarbeitung von Vollbildern mit beispielsweise 25 Bewegungsphasen pro Sekunde ausreichend, ohne daß eine Bewegungsunschärfe entsteht. Die geringere zeitliche Auflösung erlaubt eine Steigerung der örtlichen Auflösung. In stärker bewegten Bildbereichen führt eine Vollbildverarbeitung jedoch zu einem stark störenden Bewegungsrucken, sodaß in diesem Fall eine Halbbildverarbeitung mit einer entsprechend höheren zeitlichen Auflösung, beispielsweise 50 Bewegungsphasen pro Sekunde, übergegangen wird. Diese Halbbildverarbeitung besitzt nun bei gleichbleibender Kanalkapazität eine geringere örtliche Auflösung, was vom Auge allerdings nicht wahrgenommen wird und damit zu keinem Qualitätsverlust führt. Die Umsteuerung zwischen Vollbild- und Halbbildverarbeitung übernimmt ein Bewegungsdetektor in der Einrichtung ES. Nach einer bewegungsadaptiven Vorfilterung, die ebenfalls in der Einrichtung ES erfolgt, entsteht eine Bildfolge mit dem Format 625 Zeilen/40 msec/2:1. Die Farbdifferenzsignale R-Y und B-Y werden zu einem PAL-Farbsignal im PAL-Modulator M1 aufbereitet und dann mit dem bewegungsadaptiv vorverarbeiteten Leuchtdichtesignal Y in einer Signalsummationsschaltung SM zu einem kompatiblen FBAS-Signal zusammengesetzt. Nach der Signalsummation erfolgt die Übertragung auf dem Übertragungskanal ÜK. Die Signalverarbeitung auf der Empfängerseite erfolgt wie auf der Senderseite. Zuerst erfolgt eine Trennung des FBAS-Signals in Leuchtdichtesignal Y und Farbsignal Chr in der Signaltrennstufe ST. Das Farbsignal durchläuft zuerst den PAL-Demodulator M2 und wird dann zusammen mit dem Leuchtdichtesignal Y einer empfangsseitigen Einrichtung ES' zur bewegungsadaptiven Signalverarbeitung zugeführt. Diese empfangsseitige Einrichtung ES' enthält Bausteine zur Vollbildwiedergabe, Diagonalfilterung und Offsetdemodulation. In Bildbereichen mit hohen Bewegungsgeschwindigkeiten wird die zeitliche Auflösung von 50 Bewegungsphasen pro Sekunde beibehalten; es erfolgt eine vertikale Interpolation. In schwach bewegten Bildbereichen wird aus dem ankommenden Zeilensprungsignal eine Vollbildfolge gewonnen und mit hoher örtlicher Auflösung dargestellt. Sowohl die sendeseitige Einrichtung ES wie auch die empfangsseitige Einrichtung ES' werden von zwei unabhängigen Bewegungsdetektoren gesteuert. An die Einrichtung ES' schließt sich eine Dematrixschaltung DMa an zur Verarbeitung des Leuchtdichtesignals Y und der Farbdifferenzsignale R-Y und B-Y. Über den Monitor Mo erfolgt dann die Wiedergabe jedes Bildes mit erhöhter Auflösung mit 1249 Zeilen im Zeilensprung 2:1 innerhalb von 40 msec.

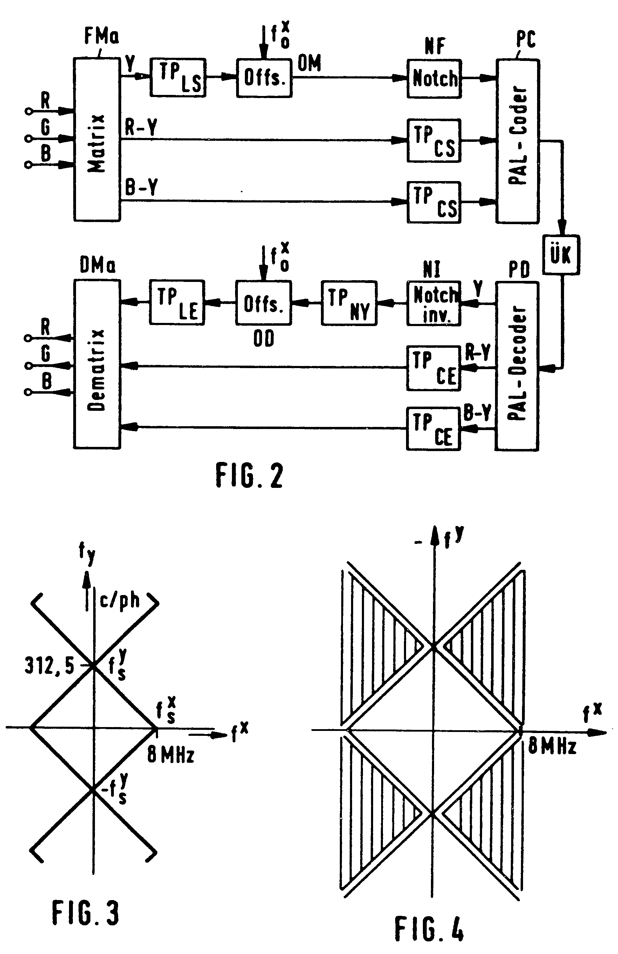

Für Bewegungsgeschwindigkeiten bis zu 2 pel/frame ist, wie zuvor erwähnt, eine zeitliche Auflösung von 25 Vollbildern/Sekunde ausreichend. Die höhere örtliche Auflösung dazu wird in diesem Fall durch eine Offsetmodulation erreicht. Diese Konzeption eines solchen Systems ist in EP 0 146 694 A1 in abgewandelter Form beschrieben und wird nun anhand von Fig. 2 dargestellt. Das von einer Bildquelle - Farbfernsehkamera - kommende RGB-Vollbildsignal (1:1) mit 625 Zeilen in 40 msec wird in der Farbmatrix FMa in ein Leuchtdichtesignal Y und zwei Farbdifferenzsignale R-Y und B-Y umgewandelt. Das Leuchtdichtesignal Y mit den Ortsfrequenzen $f^x$ und $f^y$ wird mittels des Tiefpasses $TP_{LS}$ in Richtung diagonaler Ortsfrequenzen vorgefiltert, sodaß das in Fig. 3 dargestellte Signalspektrum entsteht. In $f^x$-Richtung erfolgt eine Bandbegrenzung auf $f_s^x$ = 8 MHz und in $f^y$-Richtung wiederholt sich das Spektrum bei Vielfachen von $f_s^y$ = 312,5 c/ph (cycles per picture height).

Durch die Offsetmodulation im Offsetmodulationsbaustein DM mit der Offsetmodulationsfrequenz $f_o^x$ =

8,0 MHz entsteht das in Fig. 4 dargestellte Spektrum für das Leuchtdichtesignal. Die schraffierten Flächen in diesem Signalspektrum werden bei der Offsetmodulation in ihrer Amplitude um den Faktor 0,3 abgesenkt. Diese Flächen im Signalspektrum entstehen bei der Offsemodulation (vgl. EP 0 146 694 A1 ), und müssen aus Kompatibilitätsgründen in ihrer Amplitude abgesenkt werden. Sie werden im folgenden als "Zusatzspektrum" bezeichnet.

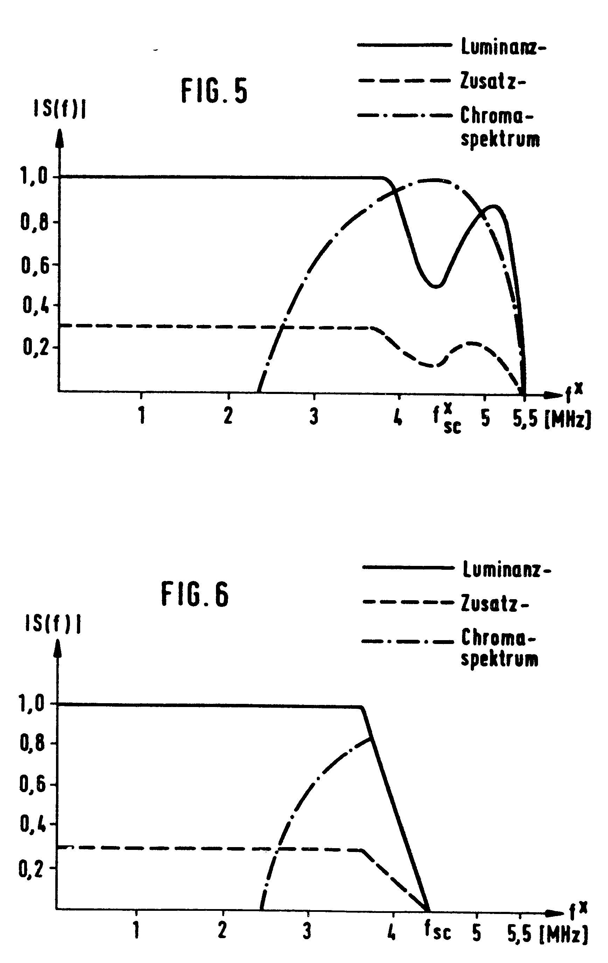

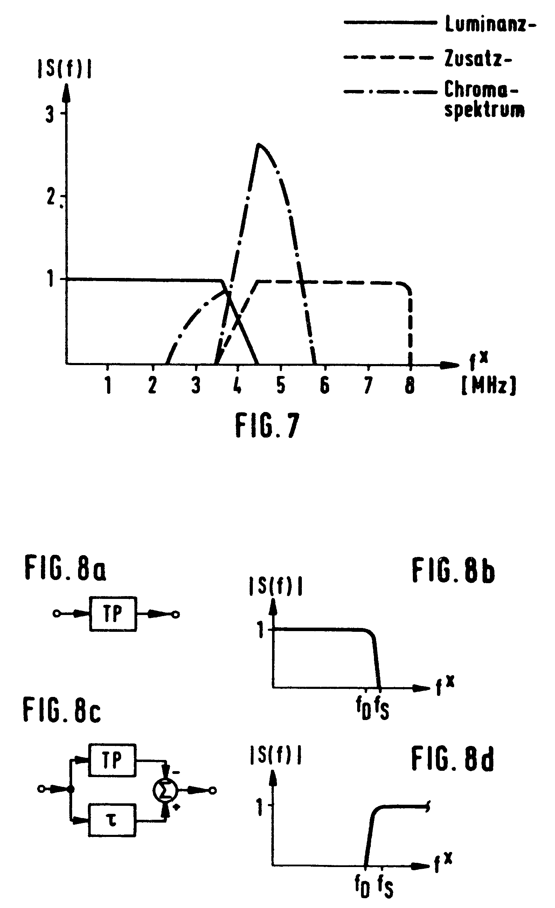

Wie Fig. 5 zeigt, werden Leuchtdichte-(Luminanz)- und Zusatzspektrum im Bereich des Farbhilfsträgers um ca. 6 dB abgesenkt, um die Cross-Colourstörung zu reduzieren. Das Zusatzspektrum wird zusätzlich um 10 dB abgesenkt, um in kompatiblen Empfängern die 25 Hz-Flackerstörung und die Cross-Colourstörung zu reduzieren. Diese Maßnahme übernimmt das Notchfilter NF. Die Farbdifferenzsignale wurden vor der PAL-Modulation auf 2,1 MHz tiefpaßgefiltert mittels der Chromasignal-Tiefpäße $TP_{CS}$. Im PAL-Coder PC erfolgt die Codierung und Summation zu einem kompatiblen FBAS-Signal. Empfängerseitig passiert das FBAS-Signal den PAL-Decoder PD, der die Signalaufspaltung in die Komponenten Y, U und V vornimmt. Im Gegensatz zu konventionellen PAL-Decodern befindet sich in dieser Ausführung kein Notchfilter im Luminanzsignalweg, um nicht einen Auflösungsverlust im Bereich des Farbhilfsträgers in Kauf nehmen zu müssen; im Gegenteil, durch das inverse Notchfilter NI hinter dem PAL-Decoder PD wird die senderseitige Signalabsenkung im Bereich des Farbhilfsträgers eliminiert, sodaß hinter diesem inversen Notchfilter NI ein ebener Frequenzgang existiert. Dadurch wird natürlich auch das Chromaspektrum mit angehoben, wodurch die Cross Luminanz-Störung noch verstärkt wird. Am Ausgang des Nyquistfilters $TP_{NY}$ erhält man das in Fig. 6 gezeigte Spektrum. Man erkennt deutlich das restliche Chromaspektrum im Luminanzsignal. Nach der empfängerseitigen Offsetdemodulation im Offsetdemodulator OD mit Amplitudenanhebung und diagonaler Nachfilterung mittels Tiefpaß $TP_{LE}$ entsteht das in Fig. 7 dargestellte Spektrum.

Das restliche Chromaspektrum erscheint einmal in Normallage in der Luminanzkomponente und zum anderen - an der 4 MHz-Achse gespiegelt und um 10 dß angehoben - in der Zusatzkomponente. Die senderseitige Absenkung des Zusatzspektrums, die der Reduktion von Flacker- und Cross-Colourstörungen dient, muß aufgrund der erforderlichen empfängerseitigen Anhebung durch eine erhöhte Cross-Luminanzstörung erkauft werden. Subjektive Tests haben ergeben, daß bei einer empfängerseitigen Signalanhebung um 10 dB das Chromaspektrum um ca. 28 dB abgesenkt werden müßte, um die Erkennbarkeitsgrenze für die Cross-Luminanz-Störung zu erreichen. Betrachtet man das trägerfrequente Chromaspektrum in Fig. 5, so fällt auf, daß das Luminanzspektrum im Bereich des Farbhilfsträgers lediglich um 6 dB abgesenkt ist; dadurch kann ein Übersprechen vom Luminanzin den Chromakanal nicht generell unterbunden werden. Da das Zusatzspektrum zusätzlich um 10 dB abgesenkt wurde, ist dessen Beitrag zur Cross-Colorstörung entsprechend geringer. Wie Untersuchungen zeigen, tritt bei einer Übertragung noch PAL-Offset im verbesserten Empfänger eine Qualitätsbeeinträchtigung hauptsächlich durch die Cross-Luminanzstörung ein. Es müssen daher Maßnahmen zur Trennung der einzelnen Spektralkomponenten getroffen werden. Bei diesen Maßnahmen soll die Qualität des kompatiblen und des verbesserten Empfängers nur unwesentlich reduziert werden.

Bei dem derzeit realisierten System zur PAL-Offsetübertragung werden das Luminanz- und das Zusatzspektrum nyquistgefiltert und anschließend offsetdemoduliert. Auf diese Weise wird eine fehlerfreie Zusammenfügung der Tiefenkomponente (Luminanz) und der Höhenkomponente (Zusatz) erreicht. Dazu ist es aber notwendig, daß die Flankenmitte des Nyquistfilters bei der halben Abtastfrequenz liegt. Im realisierten System verläuft die Flanke von 3,6 - 4.4 MHz. Daraus folgt, daß das Luminanz- und das Zusatzspektrum mindestens bis 4,4 MHz übertragen werden muß. Neben der dadurch bewirkten Cross-Colorstörung ist es ebenfalls unvermeidbar, daß ein großer Teil des Chromaspektrums im Luminanzsignal verbleibt und die starke Cross-Luminanzstörung verursacht.

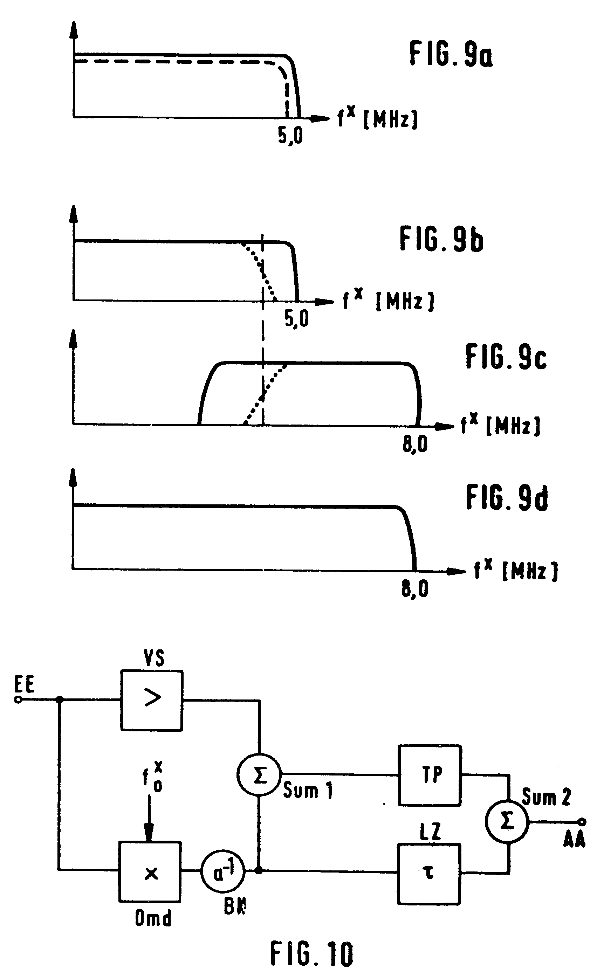

Im folgenden wird nun eine Signalfilterung gezeigt, die die Bedingung: Flankenmitte des Nyquistfilters bei der halben Abtastfrequenz, nicht erfüllen muß und daher zu bisherigen Realisierungen wesentliche Vorteile bringt. Es wird eine sogenannte "komplementäre Filterung" von Tiefen- und Höhenkomponente vorgenommen. In Fig. 8 sind Schaltungsanordnungen sowie Frequenzverläufe zur Erzeugung derartiger komplementärer Frequenzgänge gezeigt. Der Tiefpaß TP gemäß Fig. 8a habe den in Fig. 8b dargestellten Frequenzverlauf. Dann besitzt die in Fig. 8c dargestellte Schaltungsanordnung, bestehend aus der Parallelschaltung einen Tiefpaßes TP und einem Laufzeitglied $\tau$ mit anschließender Zusammenführung der Signalausgänge über ein Summierglied $\Sigma$, wobei der Tiefpaß TP an den Subtrahiereingang und das Laufzeitglied an den Summiereingang des Summiergliedes geführt ist, einen Frequenzverlauf wie er in Fig. 8d dargestellt ist. Für eine fehlerfreie Zusammenfügung der Tiefen- und Höhenkomponente muß das Leuchtdichtespektrum mit einem Tiefpaß gemäß Fig. 8a und das offsetmodulierte Zusatzspektrum mit der Schaltungsanordnung gemäß Fig. 8c gefiltert werden. In Fig. 9 sind die Frequenzverläufe der zu filternden, bzw. gefilterten Signalspektren nochmals dargestellt. Fig. 9a zeigt Tiefen- und Höhenkomponente am Empfängereingang. Die Lage der Tiefenkomponente allein ist in Fig. 9b gezeigt. Die Höhenkomponente besitzt nach der Offsetdemodulation die nach Fig. 9c gezeigte Gestalt. Die punktierten Linien in den Figuren 9 b und c stellen die beiden komplementären Filterflanken dar. In Fig. 9d ist die fehlerfreie Zusammenfügung von Tiefen- und Höhenkomponente dargestellt.

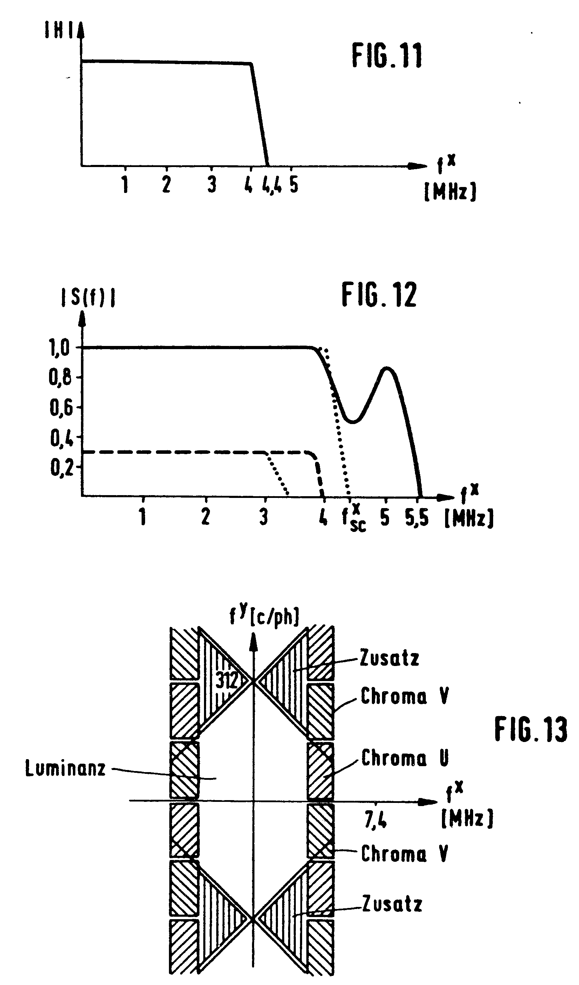

Für eine so modifizierte Offsetdemodulation gibt Fig. 10 eine Schaltungsanordnung an. Demodulation und Filterung sind dabei gegenüber der realisierten Version vertauscht. Der Empfängereingang EE in Fig. 10 ist zum einen mit einem Verstärker VS und zum anderen mit dem Offsetdemodulator OMd verbunden, dem die Offsetdemodulationsfrequenz $f_o^x$ zugeführt ist. Hinter dem Offsetdemodulator OMd ist ein Bewertungsnetzwerk BN vorgesehen, vgl. Hauptanmeldung, das das Zusatzspektrum mit dem zu a inversen sendeseitigen Signalabsenkungsfaktor $a^{-1}$ wiederanhebt. Der Ausgang des Verstärkers VS wird an den Summiereingang des Summierers Sum1 und der Ausgang des Bewertungsnetzwerkes BN an den Subtrahiereingang des Summierers Sum1 angeschlossen. Der Ausgang des Bewertungsnetzwerkes BN ist über das Laufzeitglied LZ mit der Laufzeit $\tau$ an einen Summiereingang eines weiteren Summierers Sum2 angeschlossen, und der Ausgang des ersten Summierers Sum1 ist über den Tiefpaß TP auf einen zweiten Summiereingang des Summierers Sum2 geführt. Am Ausgang AA des zweiten Summierers Sum2 ist das demodulierte Bildsignal zur Weiterverarbeitung abnehmbar. Mit dieser modifizierten Offsetdemodulation, die auf der komplementären Filterung mittels des Tiefpasses TP und dem Laufzeitglied LZ basiert, hängt die Art der Tiefpaßfilterflanke nicht mehr von der Offsetmodulationsfrequenz $f_o^x$ ab. In Fig. 11 ist der Frequenzgang des Tiefpasses TP im modifizierten Offsetdemodulator dargestellt. Bis zu einer horizontalen Ortsfrequenz $f^x$ = 4 MHz ist dieser Frequenzgang des Betrages der Übertragungsfunktion H konstant und fällt ab diesem Wert linear, bis er bei einer Frequenz von $f^x$ = 4,4 MHz die $f^x$-Achse erreicht.

Diese Tatsache, daß die Art der Tiefpaßfilterflanke nicht mehr von der Offsetdemodulationsfrequenz $f_x^o$ abhängt, kann als neugewonnener Freiheitsgrad interpretiert werden, der für die Realisierung eines übersprechfreien PAL-Offsetübertragungssystems genutzt werden kann. Die Auflösung in $f^y$-Richtung beträgt bei Anwendung der Offsetmodulation theoretisch 312,5 c/ph, das entspricht umgerechnet 7,37 MHz; die Auflösung in $f^x$-Richtung beträgt dagegen 8 MHz. Da die Auflösung in beiden Richtungen annähernd gleich sein sollte, ist es zulässig, die Offsetmodulations- bzw. -demodulationsfrequenz auf ca. 7,4 MHz zu reduzieren. Die so gewonnene Einsparung an Bandbreite kann im Zusammenhang mit der oben beschriebenen modifizierten Offsetdemodulation zur Reduktion der Übersprechstörungen genutzt werden. Anhand von Fig. 12 soll diese Tatsache näher erläutert werden. Die Offsetmodulationsfrequenz - und damit auch die Auflösung in $f^x$-Richtung - wird auf ca. 7,4 MHz festgelegt (der genaue Wert entspricht einem ganzzahligen Vielfachen der Zeilenfrequenz). Das Luminanzsignal wird wie bisher bis 5 MHz übertragen, wobei die Spektralanteile im Bereich des Farbhilfsträgers um 6 dB abgesenkt werden. Für den Tiefpaß TP im Offsetmodulator sei eine Flanke von 4,0 - 4,4 MHz vorausgesetzt; dadurch wird die Tiefenkomponente "bis an den Farbträger heran" genutzt. Um die ursprüngliche Bandbreite von 7,4 MHz zu erhalten, wird das Zusatzspektrum bis 3,4 MHz benutzt. Die punktierten Linien stellen die Verläufe der Filterflanken dar. Da das Zusatzspektrum empfängerseitig nur bis 3,4 MHz genutzt wird, darf es senderseitig auf diesen Bereich tiefpaßgefiltert werden, wodurch die Cross-Colorstörung erheblich reduziert wird. Werden die Farbdifferenzsignale auf 1 MHz tiefpaßgefiltert, so kann ein Übersprechen der Chrominanz in das Zusatzspektrum verhindert werden. Damit tritt durch die Offsetmodulation keine zusätzliche Cross-Luminanzstörung auf.

Um diesen Sachverhalt besser darstellen zu können, soll im weiteren eine mehrdimensionale Spektraldarstellung angewandt werden.

Um die Verhältnisse bei der PAL-Offsetübertragung exakt darstellen zu können, ist ein dreidimensionaler Ansatz für das Spektrum des Bildsignals notwendig. Neben den beiden Ortsfrequenzen $f^x$ und $f^y$ ist eine Zerlegung in der zeitlichen Komponente $f^t$ nötig. Es wird vorausgesetzt, daß die Bildquelle eine Vollbildfolge mit 25 Bildern/sec mit 625 Zeilen liefert. Nach entsprechenden Vorfilterungen werden das Luminanzsignal und die Farbdifferenzsignale in den synthetischen Zeilensprung umgewandelt und offset- bzw. PAL-moduliert. Das codierte FBAS-Signal durchläuft den Übertragungskanal und steht am Empfänger im synthetischen Zeilensprung zur Verfügung. Nach einer Rückwandlung in eine Vollbildfolge (z.B. 625 Z / 40 msec / 1:1) erhält man für das Spektrum des FBAS-Signals den folgenden Ausdruck:

$$S_{FBA}(f^x, f^y, f^t) = \left\{ \sum_n \sum_r B_Y (f^x, f^y - nf_c^y, f^t - rf_v^t) \right.$$

$$+ a \sum_n \sum_r B_Y (f^x + f_o^x, f^y - nf_c^y + f_c^y, f^t - rf_v^t)$$

$$+ a \sum_n \sum_r B_Y (f^x - f_o^x, f^y - nf_c^y - f_c^y, f^t - rf_v^t)$$

6

$$+ \sum_n \sum_r B_Y\left(f^x, f^y - nf_c^y, f^t - rf_v^t\right)(-)^n$$

$$+ a\sum_n \sum_r B_Y\left(f^x + f_o^x, f^y - nf_c^y + f_c^y, f^t - rf_v^t\right)(-)^n$$

$$+ a\sum_n \sum_r B_Y\left(f^x - f_o^x, f^y - nf_c^y - f_c^y, f^t - rf_v^t\right)(-)^n$$

$$+ \sum_r \sum_n B_U\left(f^x + f_{sc}^x, f^y - nf_c + \frac{1}{4}f_c^y, f^t - rf_v^t + \frac{3}{4}f_v^t\right)$$

$$+ \sum_r \sum_n B_U\left(f^x - f_{sc}^x, f^y - nf_c^y - \frac{1}{4}f_c^y, f^t - rf_v^t - \frac{3}{4}f_v^t\right)$$

$$+ e^{-j2\pi \cdot T_H\frac{3}{4}f_v^t} \sum_r \sum_n B_U\left(f^x + f_{sc}^x, f^y - nf_c^y + \frac{1}{4}f_c^y, f^t - rf_v^t + \frac{3}{4}f_v^t\right)(-)^n$$

$$+ e^{j2\pi T_H\frac{3}{4}f_v^t} \sum_r \sum_n B_U\left(f^x - f_{sc}^x, f^y - nf_c^y - \frac{1}{4}f_c^y, f^t - rf_v^t - \frac{3}{4}f_v^t\right)(-)^n$$

$$- \frac{1}{j} \sum_n \sum_r B_V\left(f^x + f_{sc}^x, f^y - nf_c^y - \frac{1}{4}f_c^y, f^t - rf_v^t - \frac{3}{4}f_v^t\right)$$

$$+ \frac{1}{j} \sum_n \sum_r B_V\left(f^x - f_{sc}^x, f^y - nf_c^y + \frac{1}{4}f_c^y, f^t - rf_v^t + \frac{3}{4}f_v^t\right)$$

$$- \frac{1}{j} e^{j2\pi T_H\frac{3}{4}f_v^t} \sum_n \sum_r B_V\left(f^x + f_{sc}^x, f^y - nf_c^y - \frac{1}{4}f_c^y, f^t - rf_v^t - \frac{3}{4}f_v t\right)(-1)^n$$

$$+ \frac{1}{j} e^{j2\pi T_H\frac{3}{4}f_v t} \sum_n \sum_r B_V\left(f^x - f_{sc}^x, f^y - nf_c^y + \frac{1}{4}f_c^y, f^t - rf_v^t + \frac{3}{4}f_v^t\right)(-)^n \Bigg\}$$

$$H_K(f^x, f^y, f^t) \cdot f_v^t\, f_c^y \cdot e^{-j2\pi T_H f^t} \qquad (1)$$

Hierin bedeuten:

| | |
|---|---|
| $B_Y$ | = Bildspektrum des Luminanzsignals, |
| $B_U$ und $B_V$ | = Bildspektren der Farbdifferenzsignale, |
| $f_o^x$ | = Offsetmodulationsfrequenz, |
| $f_c^y$ | = Bandgrenze in vertikaler Richtung, |
| $f_v^t$ | = Vollbildabtastfrequenz: 25 Hz, |
| $f_{sc}^x$ | = die Modulationsfrequenz für den PAL-Modulator, |
| $H_K$ | = Übertragungsfunktion des Übertragungskanals, |

7

a           = Amplitudengewichtungsfaktor: 0<a<1

n und r           = natürliche Zahlen 1, 2, 3, ...

In Fig. 13 ist das Spektrum aus Gleichung 1 in der $f^x f^y$-Ebene dargestellt. Der Übertragungskanal ÜK bewirkt eine Tiefpaßfilterung in $f^x$-Richtung auf umgerechnet 5 MHz. Der dick umrahmte Bereich stellt die Tiefenkomponente des Luminanzsignals dar. In den senkrecht schraffierten Bereichen befindet sich das Spektrum der Höhenkomponente.

Die Chromaspektren - diagonal schraffiert dargestellt- wiederholen sich - im Gegensatz zum Zeilensprungsystem - in $f^y$-Richtung jeweils alle 312,5 c/ph, wobei die U und V-Komponenten alternierend erscheinen. Werden die Farbdifferenzsignale sendeseitig auf 78 c/ph - das entspricht umgerechnet 1,85 MHz - vorgefiltert, überlappen sich die Chromaspektren nicht.

Dadurch ist eine empfängerseitige Trennung der U- und V-Komponenten durch eine Vertikalfilterung möglich; eine exakt arbeitende Quadraturdemodulation ist dann nicht mehr notwendig. Farbtonverfälschungen aufgrund von Phasenfehlern treten dann nicht mehr auf. Die empfängerseitige Trennung der Farbdifferenzspektren mittels einer Vertikalfilterung stellt eine Verbesserung zur derzeitigen Standard PAL-Demodulation dar.

Eine genaue Auswertung der Gleichung (1) ergibt, daß die Amplitude der Chromaspektren bei $f^y$ = ± 78 c/ph um ca. 7,7 dB geringer ist als bei $f^y$ = 312,5 c/ph ± 78 c/ph. Die Luminanzspektren besitzen einen normierten Amplitudenfaktor von 2,0, während das Chromaspektrum bei $f^y$ = ± 78 c/ph einen von 0,76 besitzt. Der verbesserte Empfänger nutzt die Tiefenkomponente bis 4,4 MHz, sodaß die Chromaspektren bei $f^y$ = ± 78 c/ph Cross-Luminanz erzeugen. Dieses ist aber nicht sehr kritisch, da die Chromaspektren an diesen Stellen mit reduzierter Amplitude erscheinen. Wie im Zusammenhang mit Fig. 12 dargestellt, wird das Zusatzspektrum empfängerseitig nur bis 3,4 MHz genutzt, sodaß es senderseitig auf diese Bandbreite gefiltert werden darf. Auf diese Weise wird ein Übersprechen des Zusatzspektrums in die Chromaspektren verhindert. Werden die Farbdifferenzsignale auf 1 MHz tiefpaßgefiltert (In $f^x$-Richtung), überlappen sich Zusatz- und Chromaspektrum nicht. Dadurch können die U- und V-Spektren mit einer Basisbandbreite von 1 MHz ohne Cross-Colorstörung aus dem Vollbild zurückgewonnen werden (an den Stellen $f^y$ = 312 c/ph ± 78 c/ph); ferner entsteht dann durch die Offsetdemodulation keine zusätzliche Cross-Luminanzstörung.

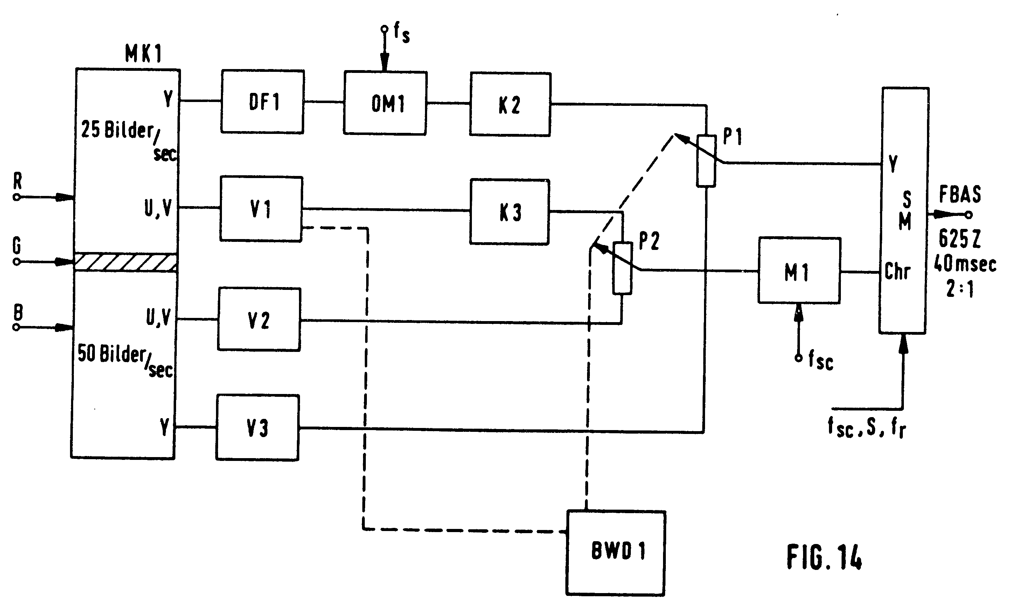

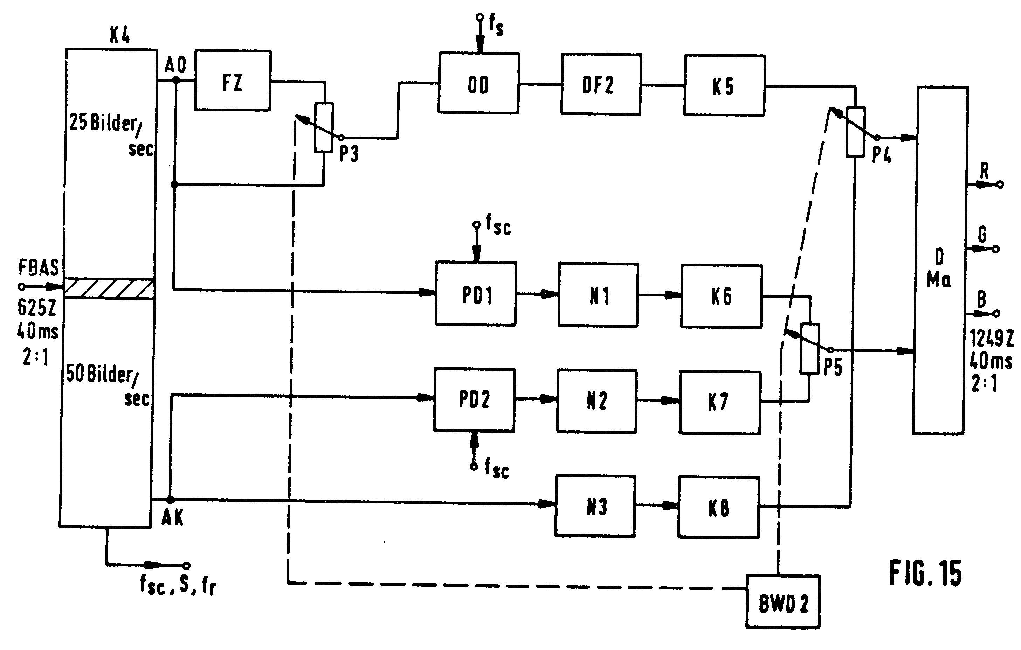

Im folgenden wird nun ein komplettes Übertragungssystem mit bewegungsadaptiver Signalverarbeitung anhand der Figuren 14 und 15 detailliert dargestellt. Ausgegangen wird hierbei vom Grundkonzept nach Fig. 1. Den Ausgangspunkt stellt wieder eine hochzeilige Bildquelle dar, z.B. Hochzeilenkamera mit dem Format 1249 Zellen/40 msec/2:1. Der Block MK1 stellt die Farbmatrix mit einem Konverter dar. In diesem Block MK1 werden die RGB-Signale matriziert und in zwei Moden parallel ausgegeben:

| 1. Mode | 25 Bewegungsphasen/sec |
|---------|------------------------|
| 2. Mode | 50 Bewegungsphasen/sec. |

In beiden Moden werden die Y,U,V-Signale entsprechend verarbeitet und ein Bewegungsdetektor BWD1 blendet dann zwischen beiden Moden mittels der von diesem Bewegungsdetektor gesteuerten Potentiometer P1 und P2 weich um. Potentiometer P1 ist für die Umsteuerung des Luminanzsignals Y vorgesehen und Potentiometer P2 für die Umsteuerung der Farbdifferenzsignale U und V. Insgesamt ist zwischen drei Geschwindigkeitsbereichen zu unterscheiden, die nachfolgend behandelt werden:

| 1. kleine Geschwindigkeiten | V ≤0,24 pel/frame |
|-----------------------------|-------------------|
| 2. mittlere Geschwindigkeiten | 0,24 pel/frame ≤ V ≤ 2 pels/frame |
| 3. hohe Geschwindigkeiten | V ≥ 2 pels/frame. |

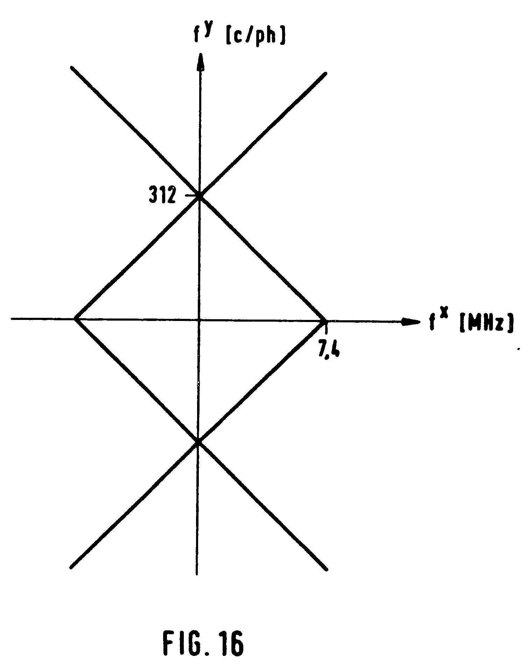

Für kleine und mittlere Geschwindigkeiten sollen 25 Bewegungsphasen/sec in Verbindung mit der Offsetmodulation übertragen werden. Bei hohen Geschwindigkeiten werden 50 Bewegungsphasen/sec in Verbindung mit einer Vertikalfilterung übertragen. Das Luminanzsignal mit 25 Bewegungsphasen/sec wird vollbildweise diagonal vorgefiltert - Diagonalfilter DF1 - und hat dann die in Fig. 16 dargestellte Form. Es besitzt In $f^x$-Richtung eine Auflösung von umgerechnet 7,4 MHz und in $f^y$-Richtung eine Auflösung von 312,5 c/ph. Damit sind die Auflösungen in beiden Richtungen äquivalent.

Bild 17 zeigt das Spektrum am Ausgang des Offsetmodulators OM1. Der sechseckige Spektralbereich stellt das Luminanzspektrum nach entsprechender Kanalfilterung (Tiefpaßfilterung auf 5 MHz) dar. Die schraffierten Bereiche sind die Höhenkomponenten des Basissignals; sie werden im weiteren "Zusatzspektrum" genannt.

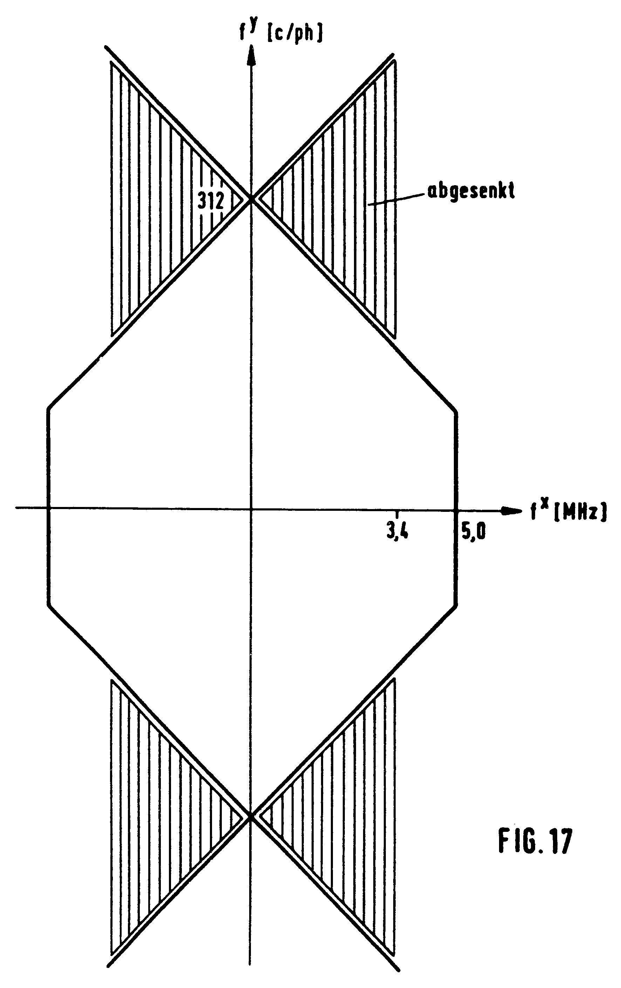

Das Zusatzspektrum wird aus Kompatiblilitätsgründen um ca. 10 dB senderseitig abgesenkt und im verbesserten Empfänger wieder angehoben. Das Zusatzspektrum wird senderseitig in $f^x$-Richtung auf 3,4 MHz tiefpaßgefiltert. Das Spektrum nach Fig. 17 kann mit Hilfe der beschriebenen "modifizierten Offsetdemodulation" wieder in ein Spektrum nach Fig. 16 umgewandelt werden.

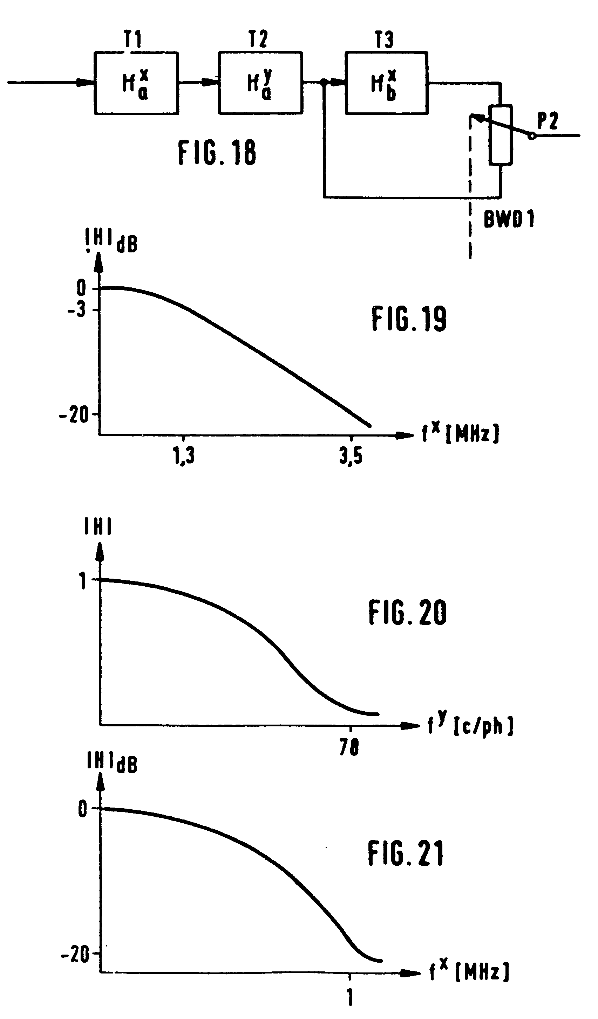

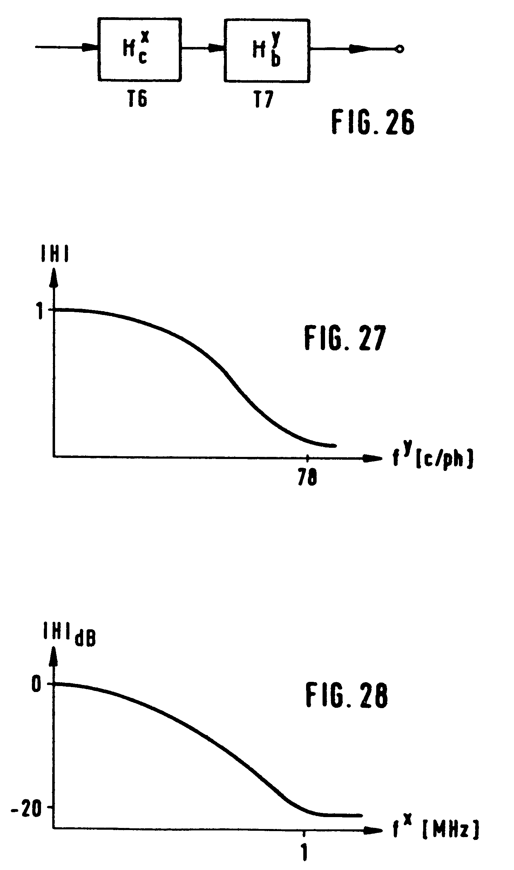

Der Konverter K2 wandelt die offsetmodulierte Bildfolge in ein synthetisches Zeilensprungsignal mit 625 Z/40 msec/2:1 um. Bei Anwendung der Offsetmodulation hat das Chromaspektrum ebenfalls eine zeitliche Auflösung von 25 Bildern/sec. Die Vorverarbeitung wird vom Vorfilter V1 bewirkt. In den Figuren 18 bis 21 ist die Wirkungsweise des Vorfilters V1 schematisch dargestellt. Das Vorfilter V1 besteht, wie Fig. 18 zeigt, aus einer Kettenschaltung von Teilfiltern T1, T2 und T3. Diese bewirken die Übertragungsfunktionen $H_a^x$ , $H_a^y$ und $H_b^x$ . Zunächst werden die Farbdifferenzsignale nach Fig. 19 in $f^x$-Richtung tiefpaßgefiltert (Teilfilter T1). Diese Filterkurve ist nach CCIR genormt. Daran anschließend erfolgt eine vertikale Tiefpaßfilterung auf 78 c/ph (Teilfilter T2; Fig. 20); das sind umgerechnet 1,85 MHz. Diese Filterung muß "weich" erfolgen, um Überschwinger zu vermeiden (Thomson-Charakteristik).

Für kleine Bewegungsgeschwindigkeiten ist das Teilfilter T3 mit der Übertragungsfunktion $H_b^x$ ohne Wirkung (Potentiometer P2 im unteren Anschlag), sodaß sich am Ausgang von Vorfilter V1 eine Kaskadierung der Filterfunktion der Teilfilter T1 und T2 gemäß den Figuren 19 und 20 ergibt.

Für mittlere Bewegungsgeschwindigkeiten befindet sich das Potentiometer P2 im oberen Anschlag, sodaß jetzt auch das Filter T3 mit der Übertragungsfunktion $H_b^x$ wirkt mit dem Frequenzgang nach Fig. 21. Das Ergebnis ist eine geringere Auflösung der Farbdifferenzsignale in $f^x$-Richtung gegenüber kleinen Geschwindigkeiten.

Die Umsteuerung zwischen beiden Filtermoden erfolgt ebenfalls weich. Der Frequenzgang nach Fig. 21 muß "weich" verlaufen, um ein Überschwingen gering zu halten.

Bei kleinen Bewegungsgeschwindigkeiten bleibt die Auflösung der Farbdifferenzsignale in $f^x$-Richtung gegenüber dem Standard-PAL-System unverändert. Bei mittleren Geschwindigkeiten wird die Auflösung in $f^x$-Richtung auf ca. 1 MHz begrenzt. Der Konverter K3 wandelt die gefilterten Farbdifferenzsignale in das Format 625 Z/40 msec/2:1 um.

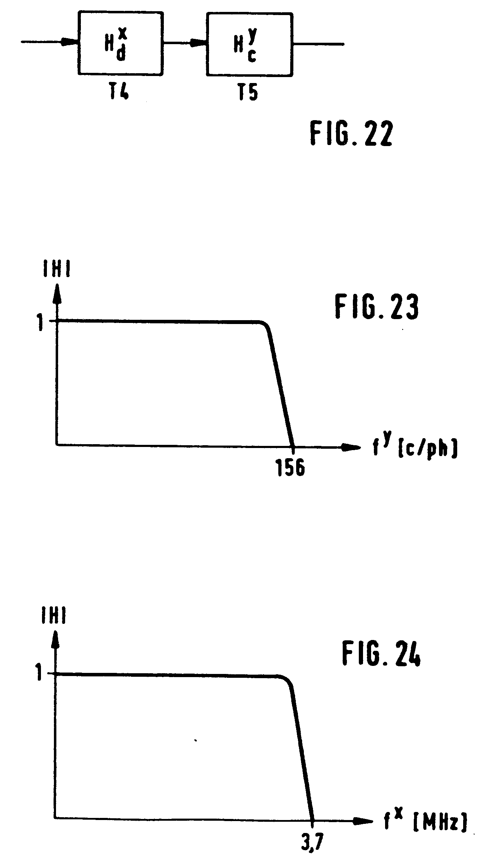

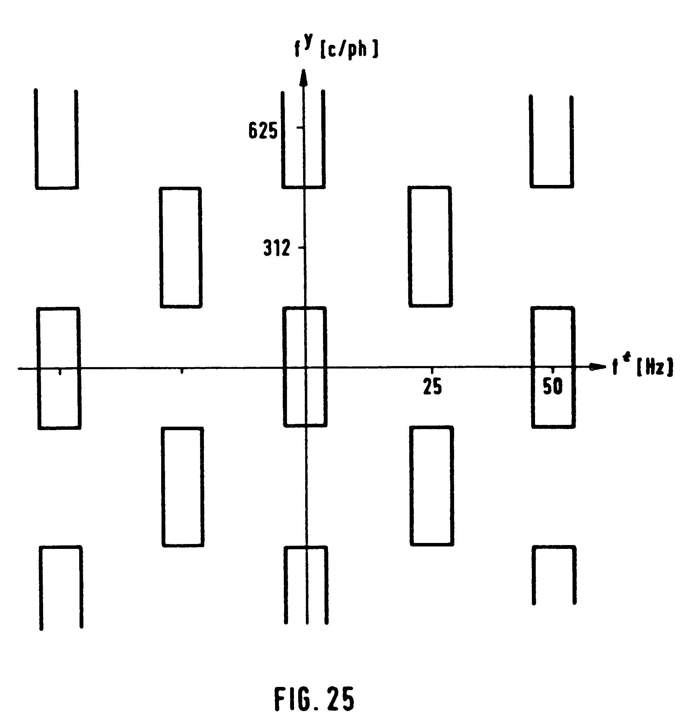

Bei hohen Bewegungsgeschwindigkeiten werden 50 Bewegungsphasen/sec verarbeitet. Das Luminanzsignal Y wird dann mit dem in Fig. 22 dargestellten Vorfilter V3 bearbeitet. Vorfilter V3 besteht aus den in Kette geschalteten Teilfiltern T4 und T5. Die Figuren 23 und 24 zeigen die Frequenzgänge der beiden Teilfilter T4 und T5 mit den Übertragungsfunktionen $H_a^x$ und $H_c^y$ . In $f^x$-Richtung wird das Luminanzspektrum auf ca. 3,7 MHz gefiltert, in $f^y$-Richtung auf 156 c/ph. Damit ist die Auflösung in beiden Richtungen wieder gleich. Fig. 25 zeigt das Y-Spektrum am Ausgang von Vorfilter V3 in der $f^y f^t$-Ebene. Durch eine empfängerseitige Vertikalinterpolation können Flackereffekte (25 Hz-Flackern) unterbunden werden. Die Farbdifferenzsignale werden mit Vorfilter V2 behandelt (Fig. 26, 27, 28). Vorfilter V2 besteht aus der Kettenschaltung der Teilfilter T6 und T7. Die Frequenzgänge der Teilfilter T6 und T7 sind in Figuren 27 und 28 dargestellt.

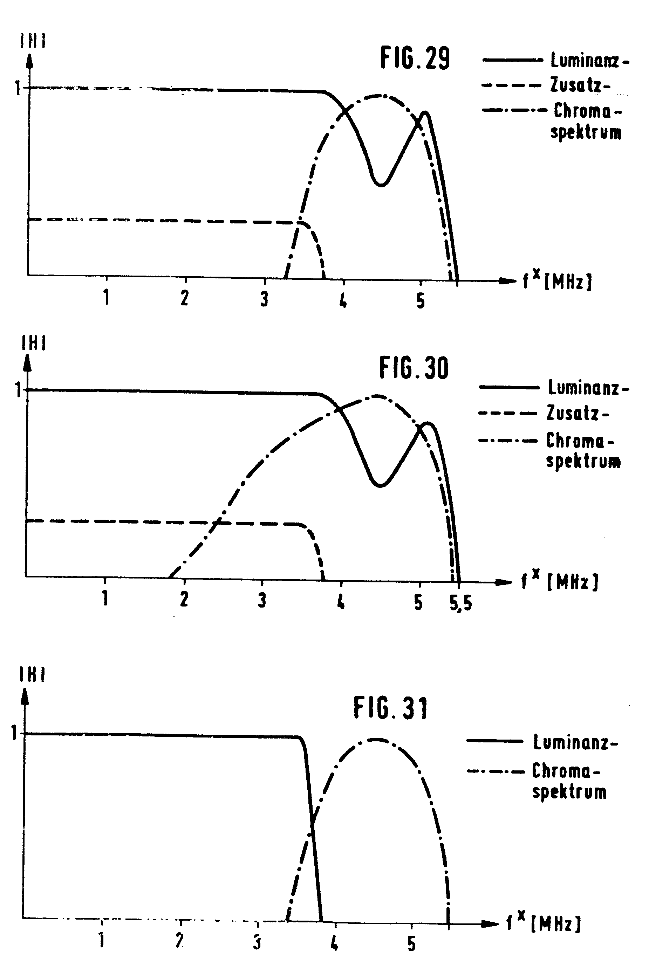

Die Farbdifferenzsignale werden in $f^y$-Richtung auf 78 c/ph gefiltert In $f^x$-Richtung erfolgt eine Tiefpaßfilterung auf ca. 0,7 - 1,0 MHz. Die Filterung muß ebenfalls überschwingfrei erfolgen. Die Konverter K2 und K3 sind zur Anpassung der Signalformate vorgesehen. Zwischen den Signalen des Konverters K2 und des Vorfilters V3 sowie zwischen den Signalen des Konverters K3 und des Vorfilters V2 steuert der Bewegungsdetektor BWD1 weich um. Anschließend werden die Farbdifferenzsignale im PAL-Modulator M1 moduliert und Zusammen mit dem Luminanzsignal in einer Summationsschaltung SM zum kompatiblen FBAS-Signal zusammengefaßt. Dem FBAS-Signal wird noch zusätzlich ein Referenzsignal zur Synchronisation der Offsetdemodulation zugeführt, beispielsweise gemäß P 34 14 271. Für die drei verschiedenen Geschwindigkeitsbereiche entstehen die in den Figuren 29 bis 31 dargestellten FBAS-Spektren entlang der $f^x$-Achse. Bei kleinen Geschwindigkeiten (V ≤ 0,24 pel/frame) erhält man das Spektrum nach Fig. 30. Zwar überlappen sich Zusatz- und Chromaspektrum stark, können aber durch zeitliche Filterung getrennt werden. Ein Übersprechen der Luminanzkomponente in den Chromakanal kann - wie zuvor gezeigt - durch geeignete Demodulation und Tiefpaßfilterung der Farbdifferenzsignale vermieden werden (Fig. 13).

Bei mittleren Geschwindigkeiten (0,24 pel/frame ≦ v ≦ 2 pel/frame) reicht das Chromaspektrum aufgrund der Tiefpaßfilterung der Farbdifferenzsignale auf 1 MHz nur noch unbedeutend in den Bereich des Zusatzspektrums hinein (Fig. 29). Eine Trennung von Chroma- und Zusatzspektrum gelingt, wie gezeigt, durch Frequenzmultiplex in $f^x$-Richtung.

Bei hohen Geschwindigkeiten (v > 2 pel/frame) entsteht das Spektrum nach Fig. 31. Luminanz- und Chrominanz werden in Frequenzmultiplex übertragen. Cross-Effekte treten nicht auf. Es soll deshalb im weiteren auf die Übertragung von 50 Bewegungsphasen/sec nicht mehr eingegangen werden.

Fig. 15 zeigt den Empfängerteil der bewegungsadaptiven Bildübertragung. Werden senderseitig 25 Bewegungsphasen/sec verarbeitet, so entsteht am oberen Ausgang des Konverters K4 das FBAS-Spektrum nach Fig. 13. Im oberen Teil des Konverters K4 werden Halbbilder zur Vollbildern zusammengefaßt. Der obere Ausgang A0 des Konverters K4 ist mit einer Einrichtung zur zeitlichen Filterung FZ verbunden, die mit einer ersten Umblendeinrichtung - Potentiometer P3 - beschaltet ist. Gesteuert vom Bewegungsdetektor BWD2 wird für mittlere Bewegungsgeschwindigkeiten der Ausgang AO des Konverters K4 direkt mit dem Offsetmodulator OD verbunden. Das Potentiometer ist dann am unteren Anschlag. Für kleine Bewegungsgeschwindigkeiten ist das Potentiometer P3 am oberen Anschlag; die zeitliche Filterung mittels der Einrichtung FZ ist voll wirksam. An den Offsetdemodulator OD schließt sich das empfangsseitige Diagonalfilter DF2 an. Der Ausgang AO des Konverters 4 für 25 Bilder/sec ist mit dem PAL-Demodulator PD1 verbunden und der Ausgang AK des Konverters 4 für 50 Bilder/sec mit dem PAL-Demodulator PD2. PAL-Demodulator PD1 und PAL-Demodulator PD2 unterscheiden sich durch ihre Subcarrier. Das Nachfilter N1 hat die Aufgabe, nur die gewünschten Chromaspektren bei ± 390 c/ph und ± 234 c/ph, vgl. Bild 13, passieren zu lassen. Das Nachfilter N2 am Ausgang des PAL-Demodulators PD2 bewirkt eine Tiefpaßfilterung der Farbdifferenzsignale:

- In $f^x$-Richtung auf ca. 0,7 - 1 MHz,
- in $f^y$-Richtung auf ca. 78 c/ph.

Nachfilter N3 am Ausgang AK des Konverters K4 ist im wesentlichen ein Interpolationsfilter. Die Signalkonverter K5 bis K8 erzeugen ein einheitliches Signalformat von 1249 Zeilen/40 msec/2:1. Über den ebenfalls vom Bewegungsdetektor BWD2 gesteuerten Potentiometer P4 erfolgt die Umblendung des Luminanzsignals von 25 Bildern/sec auf 50 Bilder/sec und über den Potentiometer P5 die Umblendung der Chrominanzsignale. Die Abgriffe der Potentiometer P4 und P5 sind mit der Dematrixschaltung DMa verbunden.

Man erkennt in Fig. 13 deutlich das sechseckige Luminanzspektrum, die dreieckigen Zusatzspektren und die rechteckigen Chromaspektren U und V. Die Chromaspektren wiederholen sich in $f^y$-Richtung alle 156 c/ph abwechselnd. Da die Chromaspektren sendeseitig in $f^y$-Richtung auf 78 c/ph tiefpaßgefiltert wurden, überlappen sich U- und V-Spektren nicht; sie können fehlerfrei voneinander getrennt werden.

Die U- und V-Signale können aus den Chromaspektren bei ± 390 c/ph und ± 234 c/ph durch geeignete Demodulation und Tiefpaßfilterung auf 78 c/ph gewonnen werden. Dadurch wird ein Übersprechen der Luminanzkomponente in den Chromakanal vermieden. Da das Zusatzspektrum bereits um 10 dB abgesenkt ist, kann das Übersprechen der Zusatzkomponente in den Chromakanal vernachlässigt werden. Man erhält also auf diese Weise ein Cross-colorfreies U- und V-Signal.

Wird - wie in Fig. 13 dargestellt - das U- und V-Spektrum für mittlere Geschwindigkeiten auf ca. 1 MHz tiefpaßgefiltert, so werden Zusatz- und Chromaspektrum im Frequenzmultiplex übertragen, und es entsteht bei der Offsetdemodulation mit Amplitudenanhebung keine zusätzliche Cross-Luminanzstörung. Bei kleinen Bewegungsgeschwindigkeiten, wo aufgrund des in $f^x$-Richtung breiteren Chromaspektrums kein Frequenzmultiplex mehr vorliegt, können die entstehenden Cross-Luminanzstörungen durch zeitliche Filterung eliminiert werden.

Aufgrund der Wahl des Tiefpasses TP im modifizierten Offsetdemodulator wird das Luminanzspektrum bis 4,4 MHz benutzt. Daraus resultiert ein Übersprechen der Chromaspektren bei ± 78 c/ph in den Luminanzkanal (Cross-Luminanz). Diese Störung ist aber unkritisch, wenn die Farbdifferenzsignale aus dem Vollbild (25 Bewegungsphasen/sec) stammen, weil dann die Chromaspektren bei ± 78 c/ph um 6 dB kleiner sind als die bei ± 390 c/ph und ± 234 c/ph. Stammen die Farbdifferenzsignale aus 50 Bewegungsphasen/sec, ergeben sich in Bezug auf die Cross-Luminanzstörung ungünstigere Bedingungen.

Bisher wurde die Bildverarbeitung nur für analoge Signale angegeben, deshalb wurde immer von der Offsemodulationbzw. -demodulation gesprochen. Die Erfindung ist selbstverständlich auch zur Bildverarbeitung für digitale Signale verwendbar. Sendeseitig wird dann das Kamerasignal zuerst analog/digital gewandelt und digital verarbeitet. Vor der Übertragung im analogen kompatiblen Übertragungskanal ÜK erfolgt eine Digital-Analogrückwandlung. Auf der Empfangsseite erfolgt entsprechend zuerst eine Analog-Digitalwandlung und eine digitale Signalverarbeitung bis zum Monitor, der entweder die digitalen Signale direkt verarbeiten kann (zukünftige Wiedergabemonitore), oder nach Rückwandlung in ein analoges Bildsignal analog verarbeitet. Die Offsetmodulatoren bzw. -demodulatoren werden für die digitale Signalverarbeitung durch entsprechende Offsetabtaster ersetzt.

**Patentansprüche**

1. Verfahren zur kompatiblen Auflösungserhöhung für Farbfernsehübertragungssysteme, wobei
   - das Leuchtdichtesignal sendeseitig planar vorgefiltert (TPL$_S$) und empfangsseitig entsprechend planar nachgefiltert (TPL$_E$) wird,
   - sendeseitig eine Offsetabtastung/Offsetmodulation (OM) im Leuchtdichtekanal und empfangsseitig eine entsprechende Nachabtastung/Demodulation (OD) erfolgt,

- alle zur Auflösungserhöhung zusätzlich zu übertragenden Signale sendeseitig geeignet abgesenkt und auf der Empfangsseite wieder entsprechend angehoben werden,
- die Offsetabtast/-modulationsfrequenz auf einen Wert reduziert wird, der unterhalb der für die Offsetabtastung/Offsetmodulation maximal möglichen Auflösung in horizontaler Richtung liegt, und derart gewählt ist, daß die Auflösung in horizontaler Richtung bezüglich der maximal möglichen Auflösung in vertikaler Richtung beim Betrachter den gleichen Auflösungseindruck vermittelt,
- die zur Auflösungserhöhung zusätzlich zu übertragenden Signale sendeseitig tiefpaßgefiltert werden mit einer maximal möglichen Grenzfrequenz, die etwa der Differenz zwischen der Offsetabtast/-modulationsfrequenz und der Frequenz des Farbhilfsträgers entspricht,
- die Farbartspektren werden sendeseitig in Richtung vertikaler Ortsfrequenzen bandbegrenzt ($TP_{CS}$) werden,
- das Leuchtdichtesignal und die zur Auflösungserhöhung zusätzlich übertragenen Signale empfangsseitig frequenzbandmäßig komplementär gefiltert werden,
- die Farbartspektren werden empfängerseitig aus dem Vollbild gewonnen werden.

2. Verfahren nach Anspruch 1, dadurch gekennzeichnet, daß für kleine Bewegungsgeschwindigkeiten, beispielsweise bis zu 0,24 pel/frame, die Farbdifferenzsignale ohne zusätzliche senderseitige Frequenzbandbegrenzung in horizontaler Richtung übertragen werden, und daß zur Reduzierung des Übersprechens, insbesondere der Cross-Luminanz, empfängerseitig eine zeitliche Filterung des Leuchtdichtesignals erfolgt.

3. Verfahren nach Anspruch 1, dadurch gekennzeichnet, daß für mittlere Geschwindigkeiten, beispielsweise von 0,24 pel/frame bis 2 pel/frame, die Farbdifferenzsignale senderseitig in horizontaler Richtung tiefpaßgefilert werden, wobei der Bereich dieser Tiefpaßfilterung derart gewählt ist, daß sich die zur Auflösungserhöhung zusätzlich zu übertragenden Signale und die Farbartspektren nicht überlappen.

**Claims**

1. A method for the compatible increase in resolution for colour television transmission systems, wherein
   - at the transmitter the luminance signal is planarly prefiltered ($TPL_S$) and at the receiver it is correspondingly planarly postfiltered ($TP_{LE}$);
   - at the transmitter, offset sampling/offset modulation (OM) is effected in the luminance channel and at the receiver a corresponding postsampling/demodulation (OD) takes place;
   - all signals additionally transmitted to increase resolution are suitably lowered at the transmitter and are raised again correspondingly at the receiver;
   - the offset sampling/offset modulation frequency is reduced to a value which lies below the maximum possible resolution in the horizontal direction for offset sampling/offset modulation, and has been selected in such a manner that the resolution in the horizontal direction, with respect to the maximum possible resolution in the vertical direction, gives the observer the impression of the resolution being the same;
   - the signals additionally transmitted to increase resolution are lowpass filtered at the transmitter with a maximum possible cutoff frequency which approximately corresponds to the difference between the offset sampling/offset modulation frequency and the frequency of the chrominance subcarrier;
   - the chromaticity spectra are bandwidth limited ($TP_{CS}$) at the transmitter in the direction of vertical spatial frequencies;
   - at the receiver, the luminance signal and the signals transmitted additionally to increase resolution are complementarily filtered with respect to their frequency bands;
   - at the receiver, the chromaticity spectra are obtained from the full frame.

2. A method according to claim 1, characterised in that, for low motion velocities, for example up to 0.24 pel/frame, the chrominance subcarrier signals are transmitted without additional frequency band limitation in the horizontal direction at the transmitter and crosstalk, particularly cross-luminance, are reduced in that the luminance signal is time filtered at the receiver.

3. A method according to claim 1, characterised in that, for medium velocities, for example 0.24 pel/frame to 2 pel/frame, the chrominance subcarrier signals are lowpass filtered in the horizontal direction at the transmitter, with the range of this lowpass filtering being selected so that the signals to be transmitted additionally to increase resolution and the chromaticity spectra will not overlap.

**Revendications**

1.  Procédé d'augmentation compatible de la résolution pour systèmes de transmission de télévision en couleur,
    -   où le signal de luminance est préfiltré de manière plane côté émetteur (TPL$_S$) et est postfiltré de manière plane correspondante côté réception (TP$_{LE}$) ;
    -   où on opère côté émission une détection/modulation du décalage (OM) sur la voie de luminance et une détection/démodulation (OD) correspondante du côté réception ;
    -   où tous les autres signauxqui doivent être transmis pour l'augmentation de la résolution sont atténués de manière adéquate côté émission, pour être accentués ensuite de manière correspondante côté réception ;
    -   où la fréquence d'échantillonnage/de modulation du décalage est réduite à une valeur qui est inférieure à la résolution maximale possible pour la détection/modulation du décalage dans la direction horizontale, et est choisie de manière à ce que la résolution dans la direction horizontale donne au spectateur la même impression de résolution que la résolution maximale possible dans la direction verticale ;
    -   où les signaux à transmettre en plus pour l'augmentation de la résolution sont filtrés côté émission par un passe-bas dont la fréquence de coupure maximale possible correspond sensiblement à la différence entre la fréquence d'échantillonnage/de modulation du décalage et la fréquence de la sous-porteuse couleur ;
    -   où les spectres de chrominance sont limités (TP$_{CS}$) côté émission dans la direction des fréquences locales verticales ;
    -   où le signal de luminance et les signaux transmis en plus pour l'augmentation de la résolution sont filtrés côté réception selon des bandes de fréquence complémentaires ;
    -   où les spectres de chrominance sont extraits côté réception de l'image.

2.  Procédé selon la revendication 1, caractérisé en ce que, pour les faibles vitesses de mouvement, par exemple jusqu'à 0,24 pixel/trame, les signaux de différence de couleur sont transmis sans limitation supplémentaire côté émission de la bande de fréquence dans la direction horizontale, et en ce que, pour réduire la diaphonie, notamment la luminance diaphotique, un filtrage temporel du signal de luminance est réalisé côté réception.

3.  Procédé selon la revendication 1, caractérisé en ce que, pour les vitesses moyennes de mouvement, par exemple de 0,24 pixel/trame à 2 pixels/trame, les signaux de différence de couleur sont filtrés par un passe-bas dans la direction horizontale côté émission, la place de ce passe-bas étant choisie de manière à ce que les signaux transmis en plus pour l'augmentation de la résolution et les spectres de chrominance ne se superposent pas.

**FIG.1**

FIG. 2

FIG. 3

FIG. 4

FIG.5

Luminanz-
Zusatz-
Chromaspektrum

|S(f)|

1,0
0,8
0,6
0,4
0,2

1  2  3  4  $f_{sc}^x$  5  5,5 [MHz]  $f^x$

FIG.6

Luminanz-
Zusatz-
Chromaspektrum

|S(f)|

1,0
0,8
0,6
0,4
0,2

1  2  3  4  $f_{sc}$  5  5,5 [MHz]  $f^x$

FIG. 7

FIG. 8a

FIG. 8b

FIG. 8c

FIG. 8d

FIG.9a

FIG.9b

FIG.9c

FIG.9d

FIG.10

**FIG.11**

**FIG.12**

**FIG.13**

FIG.14

EP 0 175 860 B1

FIG. 15

FIG. 16

FIG.17

FIG. 18

T1 — $H_a^x$  T2 — $H_a^y$  T3 — $H_b^x$  P2  BWD1

FIG. 19

$|H|_{dB}$

0
-3

-20

1,3   3,5   $f^x$ [MHz]

FIG. 20

$|H|$

1

78   $f^y$ [c/ph]

FIG. 21

$|H|_{dB}$

0

-20

1   $f^x$ [MHz]

EP 0 175 860 B1

FIG. 26

FIG. 27

FIG. 28

24

$H_d^x$

T4

$H_c^y$

T5

FIG. 22

|H|

1

156

$f^y$ [c/ph]

FIG. 23

|H|

1

3,7

$f^x$ [MHz]

FIG. 24

FIG. 25

26

FIG. 29
Luminanz-
Zusatz-
Chromaspektrum

FIG. 30
Luminanz-
Zusatz-
Chromaspektrum

FIG. 31
Luminanz-
Chromaspektrum